# EUROPEAN PATENT APPLICATION

(11) **EP 1 353 474 A2**
(43) Date of publication of application: **15.10.2003**
(21) Application number: 03251491.1
(22) Date of filing: 12.03.2003
(51) Int. Cl.: H04L 12/26

(54) **Indicating occurrence of protocol events**

(30) Priority: 26.03.2002 US 105791
(71) Applicant: Agilent Technologies, Inc., a corporation of the State of Delaware, Palo Alto, CA 94303-0870 (US)
(72) Inventor: Wende, Michael T., Agilent Technologies, Inc., Liberty Lake, WA 99019-9599 (US); Goldsack, Peter, Agilent Technologies UK Limited, West Lothian EH30 9TG (GB); Cochrane, John, Agilent Technologies UK Limited, West Lothian EH30 9TG (GB)
(74) Representative: Coker, David Graeme

(57) **Abstract**

In order to indicate that an event has occurred in conformity with a predetermined protocol, a step involved in implementation of the protocol is selected. An association is recorded with the selected step of a requirement for a trigger signal. The performance of steps comprising implementation of the protocol is monitored, and a condition related to performance of the selected step is detected. A trigger signal is generated, in addition to any signal generated as part of implementation of the protocol, to indicate occurrence of the detected condition. The detected condition may comprise, for example, active performance of a step to generate an output such as transmission of a message, or passive performance of a step to receive an input, or detection that a time interval has elapsed during which the step could be expected to have been performed.

## Description

### Technical Field

This invention relates to indicating occurrence of events which occur in conformity with a predetermined protocol. The invention may be used, for example, for generation of trigger signals indicative of events occurring, or predicted to occur, on the basis of information from layers of a protocol stack other than the physical layer. The detection or prediction of a protocol event and the initiation of the trigger signal may be implemented in software.

### Background Art

A trigger signal is a common feature in instrumentation, typically using transistor-transistor logic (TTL) signals at defined voltage levels, having either a positive- or negative-going edge and a defined pulse width. Such a signal can be used to initiate a user-defined behaviour (e.g. taking a measurement of a parameter) in the equipment or device to which the trigger signal is supplied.

For example, modern mobile communications devices, such as mobile phones and personal digital assistants, are typically designed on the basis of multiple, predefined, interacting protocols. These specify sequences of actions required to implement the wide range of functions such a device may provide, such as voice calls and short messaging (SMS) using the GSM mobile phone system, and data transfers using the General Packet Radio System (GPRS). Correct operation of these complex functions requires the execution of large numbers of operations, often under software control, in the correct sequence and with precise and accurate timing.

Testing such devices can present severe challenges, especially when a malfunction involves failure of different devices to inter-operate correctly. It is an object of this invention to provide methods and apparatus for facilitating such testing.

### Disclosure of Invention

According to one aspect of this invention there is provided a method of providing an indication relating to occurrence of an event in conformity with a predetermined protocol, comprising:
selecting a step involved in implementation of the protocol;
recording association with the selected step of a requirement for a trigger signal;
monitoring performance of steps comprising implementation of the protocol;
detecting a condition related to performance of the selected step; and
generating a trigger signal, in addition to any signal generated as part of implementation of the protocol, to indicate occurrence of the detected condition.

The invention enables a trigger signal to be generated upon occurrence of any selected event in a device being monitored and that is performing a sequence of events defined by a protocol. This signal can be used, for example, to make a measurement or capture a signal in circuitry (possibly in an entirely different device) which should be performing another operation in response to or synchronously with occurrence of the selected event. Thus, testing of correct operation of a mobile communications device and a base station with which it should communicate is facilitated.

The selected step associated with a requirement for a trigger signal may be any of a wide variety of actions and features incorporated in a protocol, such as sending of a message, receipt of a message, a transition within a state machine which is maintained during operation of a protocol, or expiry of a timer.

According to another aspect of the invention there is provided apparatus for providing an indication relating to occurrence of an event in conformity with a predetermined protocol, comprising:
a store for recording association of a requirement for a trigger signal with a selected step involved in implementation of the protocol;
a monitor for monitoring performance of steps comprising implementation of the protocol;
a detector for detecting a condition related to performance of the selected step; and
a trigger signal generator for generating a trigger signal, in addition to any signal generated as part of implementation of the protocol, to indicate occurrence of the detected condition.

### Brief Description of Drawings

A method and apparatus in accordance with this invention, for generating trigger signals upon occurrence of an event in conformity with a protocol, will now be described, by way of example, with reference to the accompanying drawings, in which:
- Figure 1: illustrates the concept of a protocol stack;
- Figure 2: shows a standard 7-layer model of a protocol stack;
- Figure 3: is a block schematic diagram of functional blocks for generating a trigger signal in accordance with this invention;
- Figure 4: is a message sequence chart illustrating physical transmission of a protocol message from a higher protocol layer;
- Figures 5A and: 5B show respectively a normal method of sending a message to a lower protocol layer, and a modified method in accordance with this invention;
- Figures 6A and 6B: show respectively a normal method of processing a message received from a higher protocol layer, and a modified method in accordance with this invention;
- Figure 7: is a message sequence chart illustrating prediction of when expected behaviour in a peer protocol layer should occur; and
- Figure 8: is a message sequence chart illustrating asynchronous indication that an event has occurred.

### Best Mode for Carrying Out the Invention, & Industrial Applicability

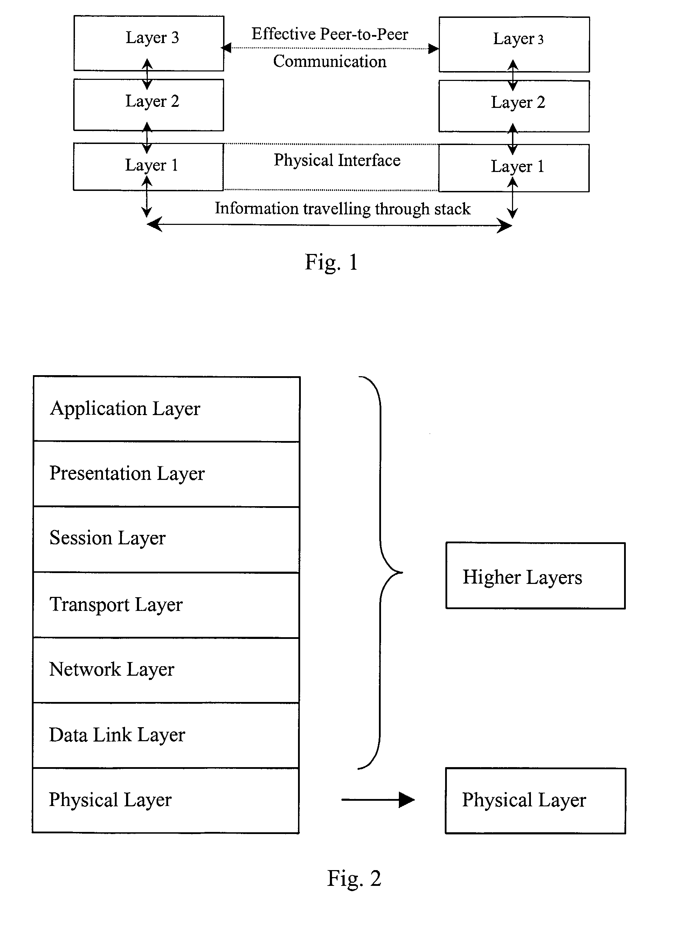

A protocol stack is a well-defined concept which is used extensively in the conception, design and implementation of communications systems. Referring to Figure 1, such a stack consists of a series of protocol layers, each of which has its own role. A layer can communicate with its peer layer (e.g. in another device) by passing information down through the layers of the protocol stack and over a physical interface, which comprises layer one, to the other device. The information will then travel up through the layers of the protocol stack in the second device, to reach the peer layer.

The International Standards Organisation (ISO) has defined a seven-layer model, shown in Figure 2, for protocols for network communications. This model is also known as the Open Systems Interconnection (OSI) model. As noted above, the lowermost physical interface or layer is responsible for physical transmission of signals between the devices to convey information, as well as for the encoding/decoding of those signals. The information content, along with instructions or requests for peer layers to transmit information, are provided by the six higher layers.

In practice a protocol may be implemented by using a general-purpose processor, or a more dedicated digital signal processor, operating under control of software program instructions stored in associated memory. The program instructions specify the sequence of operations required to perform the various steps embodied in each layer of the protocol.

The invention involves generation of trigger signals, for example to co-ordinate operation of test and monitoring equipment. Usually a trigger signal is required to comply with predefined voltage level and timing characteristics. Generation of such a trigger signal, for example a TTL signal having a defined voltage with a positive- or negative-going edge, is in itself a standard capability provided in commercially-available integrated-circuit chips. To fix the period of time for which the trigger signal is active, the chip is arranged to read in a repetitive cycle the contents of a sequence of memory locations that each contain either a binary 1 or a binary 0 value. The value stored in a memory location is used to determine whether the output from the chip is a high or low voltage level for brief, fixed time interval. At the end of that interval the value in the next memory location is inspected, to determine the output signal level for the following interval. Typically the majority of memory locations are configured to contain one value, and an occasional trigger signal is produced by the presence of the other value in a small block of adjacent memory locations. The position of the block within the overall sequence of locations, and the timing of reading of the first location in the sequence, enable control of the trigger signal to occur at a desired instant in time. A device that can provide this functionality is referred to hereinafter as a 'trigger chip'.

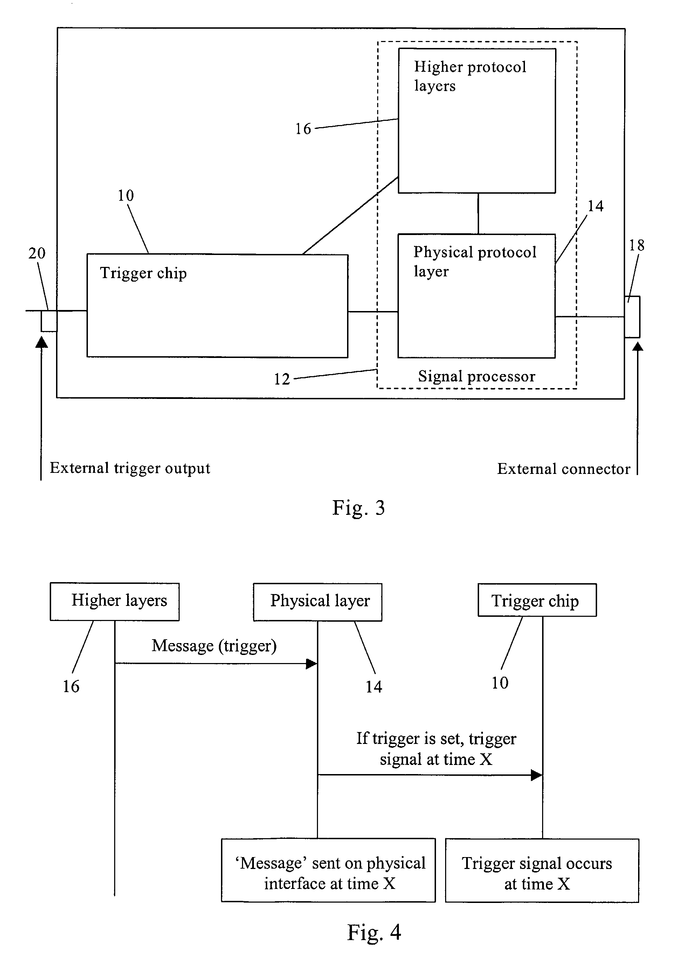

Figure 3 shows a trigger chip 10 and a processor 12 that implements the physical layer 14 and higher layers 16 of a protocol, interacting to provide an apparatus in accordance with this invention. The processor 12 is coupled to an external connector 18 for output of physical layer signals. This external connector provides the physical interface for communication with a peer device, either wired or wirelessly. Both the physical layer and the higher layers of protocol are arranged to interact with the trigger chip 10. For example, the processor 12 can supply signals to the trigger chip 10 in accordance with instructions in its controlling software program. For convenience and clarity references hereinafter to communication between the processor 12 and the trigger chip 10 may be expressed in terms of communication with the protocol layers implemented by the processor when in operation.

In order to communicate in accordance with specified behaviour (e.g. for a GSM/GPRS air interface), the definition of a physical layer typically embodies a concept of absolute time, that is a time reference by which the operation of the entire communications link, including the higher protocol layers at both ends of the link, is co-ordinated. In accordance with this invention, this capability is used to enable the physical layer 14 to communicate with the trigger chip 10 and produce trigger signals at defined instants in time on an external trigger output 20. The higher layers 16 may also communicate with the trigger chip 10 directly to produce trigger signals. However, higher layer events that require an association with absolute time typically route their requests for a trigger signal through the physical layer 14.

A 'protocol event' as referred to herein is something that occurs in the interaction of one of the higher layers 16 with a peer layer or its adjacent layers in the protocol stack implemented in another device. Such a protocol event, while initiated by one of the higher layers 16, may involve information passing to a lower layer, including the physical layer 14 - for example the transmission of a message. The protocol event may consist of a significant occurrence in the implementation of a particular layer - for example, the start or end of a procedure or the expiry of a timer. It may consist of a combination of one or more protocol events occurring in different layers. It may consist of the reception of a particular message at a protocol layer, or a message containing a particular parameter or parameter value. Another type of protocol event is predictive. In this case, one of the higher layers 16 expects certain behaviour from a peer layer in another device to occur, typically at a certain point in time. Even if this expected behaviour does not actually occur, owing to malfunction of the peer device, its predicted occurrence and timing in accordance with the protocol still constitute a protocol event.

Determining which protocol event should initiate a trigger signal depends on the application, for example functional testing of the air interface of a mobile phone. In this case protocol messages are sent back and forth between the peer protocol stacks (e.g. phone protocol stack and test instrument protocol stack). Some of these messages can cause changes to the physical transmission (frequency, power, timing). It is challenging in this situation to relate together the following occurrences which are separated in time and in different devices:
- A higher layer decision to send a message.
- Physical transmission of that message over the air interface.
- Reception of that message in the peer stack.
- An expected response from the peer stack.
Therefore it is advantageous in this example to be able to define protocol events that are associated with each occurrence, to initiate the generation of a trigger signal.

The precise manner of detection of each protocol event and the generation of an associated trigger signal varies on a case by case basis. Accordingly several examples will now be given of various types of event. In these cases a standard implementation of a protocol layer is adapted to check whether certain protocol events should cause the generation of a trigger signal. It will be assumed that the particular implementation of higher layers does not embody the concept of absolute time.

### Physical transmission of a higher layer protocol message.

Referring to Figure 4, as a message passes down through the protocol stack and into the physical layer 14, a parameter or indicator (flag) is added to it which the physical layer examines. If the added parameter is set, the physical layer 14 configures the trigger chip 10 such that a trigger signal is produced at the same time as the message is transmitted on the external connector 18.

In considering this example it is useful to examine the behaviour of the protocol layers, contrasting the behaviour with and without the protocol event trigger functionality.

The higher layers are a combination of all layers above the physical layer. The illustrated behaviour could take place at any one of these higher layers, depending on which message a user wishes to stimulate a trigger.

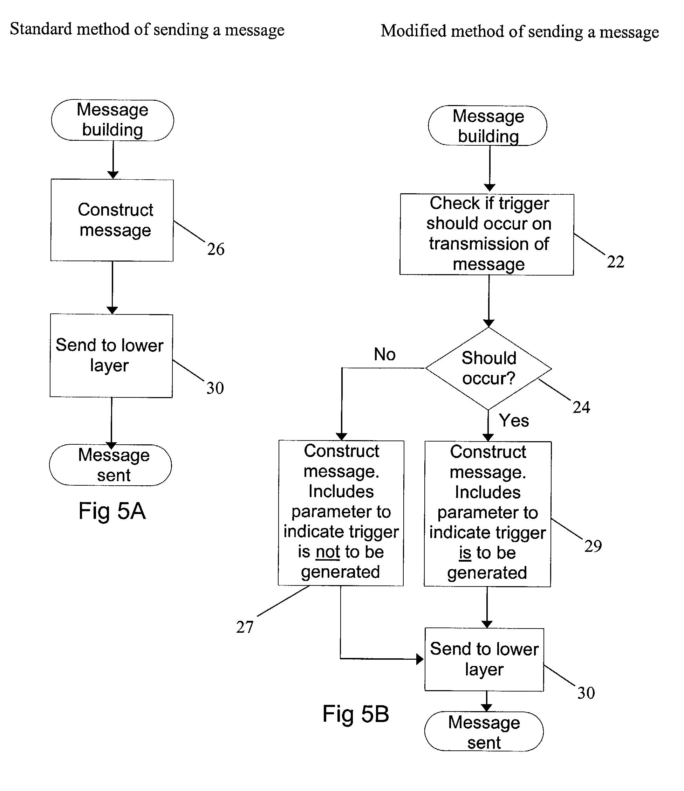

Figure 5a shows the standard method of sending a message from a higher protocol layer 16. A message is constructed at step 26 and passed to a lower layer at step 30. Figure 5b shows how this operation is modified in order to implement the invention. Before constructing the message, a check is made at steps 22 and 24 (e.g. by examining a flag or indicator controlled via a user interface) of whether this particular message should generate a trigger when transmitted. The message construction or format is modified to include an extra parameter to indicate whether or not the trigger should be generated when the message is transmitted. This extra parameter is set appropriately at one of steps 27 and 29, depending on the outcome of the test at step 24, before the message is passed to the lower layer at step 30.

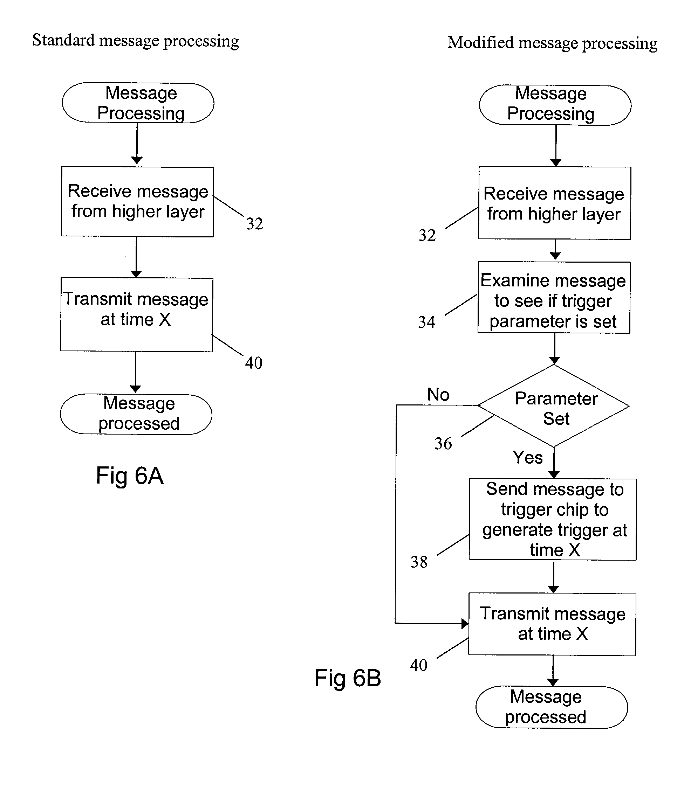

The physical layer 14 is modified in a complementary manner. Referring to Figure 6a, in standard operation a message is received by the physical layer at step 32, and transmitted at time X (step 40). The modified operation, shown in Figure 6b, checks the extra parameter at steps 34 and 36 when the message is received. If the parameter is set, the physical layer sends a message to the trigger chip 10 at step 38, requesting a trigger signal to be generated at time X. The message itself is then transmitted at step 40 as before, also at time X.

### Predicting when expected peer behaviour should occur.

The relevant higher layer 16 knows when in time the specific peer behaviour of interest is expected to occur. However the higher layer itself typically does not possess the appropriate chronometer functionality, so it sends to the physical layer 14 an internal special-purpose message, added to the protocol for this purpose, to instruct the trigger chip 10 to create a trigger signal at this particular time.

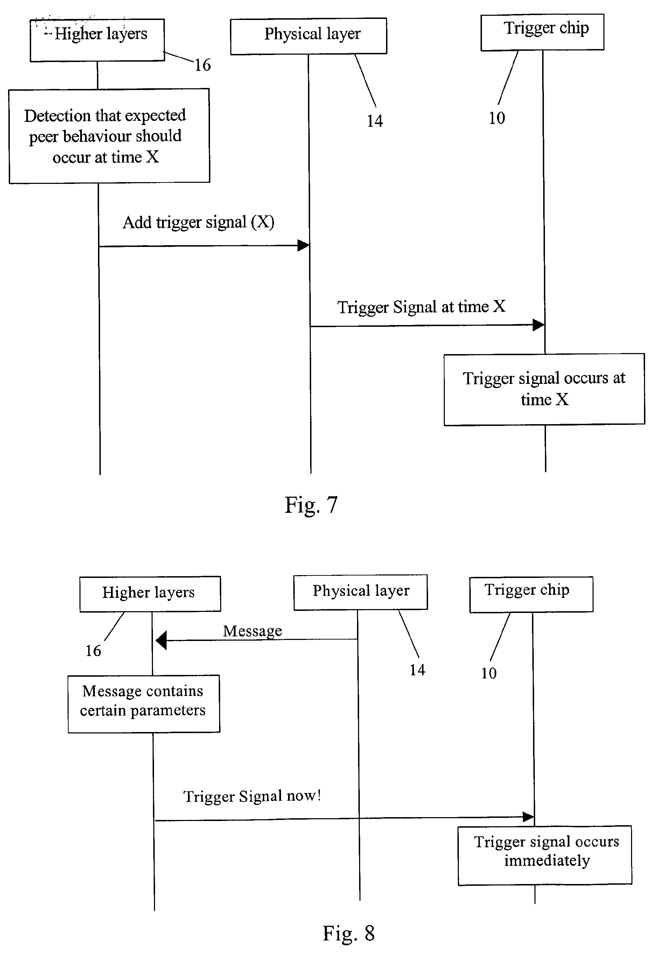

An example can be described in the context of the functional air interface test scenario already mentioned, with reference to Figure 7. The higher layer 16 in the test equipment instructs (sends a message to) the peer layer in the mobile device under test to change to a new radio frequency. The higher layer 16 in the test equipment expects (predicts) this change to happen upon occurrence of a particular subsequent transmission frame in the mobile device's transmitted signal, say within one GSM radio frame (4.6ms); accordingly it sends a request to the physical layer 14 in the test equipment protocol stack to create a trigger signal at this time.

### An asynchronous indication that an event has occurred.

This example relates to occurrence of a previously-specified higher layer protocol event. The higher layer 16 communicates directly (rather than via the physical layer 14) with the trigger chip 10 which then creates a trigger signal. A specific example of this is successful reception by a higher layer 16 of a message from a peer layer in another device, as shown in Figure 8. The trigger signal in this case is simply a confirmation that the event has occurred, rather than a signal from which absolute timing can be derived. Depending on the event there may be latency in the protocol stack, due to re-transmissions or message reassembly. This latency may render timing information of limited utility.

## Claims

1. A method of providing an indication relating to occurrence of an event in conformity with a predetermined protocol, comprising:
selecting a step involved in implementation of the protocol;
recording association with the selected step of a requirement for a trigger signal;
monitoring performance of steps comprising implementation of the protocol;
detecting a condition related to performance of the selected step; and
generating a trigger signal, in addition to any signal generated as part of implementation of the protocol, to indicate occurrence of the detected condition.

2. The method of claim 1, wherein detection of the condition related to performance of the selected step comprises detection of performance of the step.

3. The method of claim 1, wherein detection of the condition related to performance of the selected step comprises detection that a time interval has elapsed during which the selected step could be expected to have been performed.

4. The method of any one of the preceding claims, wherein the selected step comprises generation of an output, such as a protocol message.

5. The method of any one of claims 1 to 4, wherein the selected step comprises receipt of an input, such as a protocol message.

6. Apparatus for providing an indication relating to occurrence of an event in conformity with a predetermined protocol, comprising:
a store for recording association of a requirement for a trigger signal with a selected step involved in implementation of the protocol;
a monitor for monitoring performance of steps comprising implementation of the protocol;
a detector for detecting a condition related to performance of the selected step; and
a trigger signal generator for generating a trigger signal, in addition to any signal generated as part of implementation of the protocol, to indicate occurrence of the detected condition.
